# NEUE EUROPÄISCHE PATENTSCHRIFT

(11) **EP 2 377 725 B2**
(45) Veröffentlichungstag und Bekanntmachung des Hinweises auf die Entscheidung über den Einspruch: **25.01.2017**
(45) Hinweis auf die Patenterteilung: 06.11.2013
(21) Anmeldenummer: 10160325.6
(22) Anmeldetag: 19.04.2010
(51) Int. Cl.: B60R 1/00, G06T 5/00, H04N 5/262

(54) **Außenspiegelsimulation**
Side mirror simulation
Simulation de rétroviseur

(43) Veröffentlichungstag der Anmeldung: 19.10.2011
(73) Patentinhaber: SMR Patents S.à.r.l., 1653 Luxembourg (LU); Audi AG, 85045 Ingolstadt (DE)
(72) Erfinder: EDER, Oliver, 75446, Pinache (DE); LINSENMAIER, Frank, 71384, Weinstadt (DE); Heinemann, Patrick, 85092 Kösching (DE)
(74) Vertreter: Weber-Bruls, Dorothée

(56) Entgegenhaltungen:
- WO-A1-03/051671
- WO-A1-2009/043783
- WO-A2-2008/050022
- DE-A1- 10 030 359
- DE-A1- 10 043 099
- DE-A1-102008 031 784
- DE-A1-102008 035 429
- DE-B3-102007 054 342
- JP-A- 2000 071 877
- US-A- 5 949 331
- US-A1- 2002 171 738
- US-A1- 2003 128 182
- US-A1- 2008 159 594

## Beschreibung

Die Erfindung betrifft eine Außenspiegelsimulation mit den Merkmalen des Oberbegriffs des Anspruchs 1 sowie ein Verfahren mit den Merkmalen des Anspruchs 4.

Die Darstellung auf einer Anzeigeeinrichtung stellt die Daten auf einen vom Fahrer oder Fahrzeughersteller gewünschte Weise dar.

### Stand der Technik

Aus dem Stand der Technik sind vielfältige Lösungen zur Erfassung von Bilddaten und deren Darstellung für einen Fahrer eines Kraftfahrzeugs bekannt. Die Bilderfassung erfolgt über eine oder mehrere am Fahrzeug installierte Kameras. Die unterschiedlichen Assistenzsysteme verarbeiten die Daten des erfassten Bildes auf die unterschiedlichsten Weisen.

Eine gattungsgemäße Außenspiegelsimulation ist bekannt aus DE 10 2008 035 429 A1.

Aus der US 2008/0159594 ist ein System bekannt, das mit einer Fischaugen-Optik Bilder aus der Umgebung des Fahrzeugs erfasst. Durch diese Weitwinkeloptik werden die Bilddaten mit einer großen Verzerrung erfasst. Die Bilddaten, aufgenommen von den Pixeln der Kamera, werden blockweise entzerrt.

Die Darstellung des Bildes erfolgt mit den entzerrten Bilddaten, da eine Abbildung der Fahrzeugumgebung erwünscht ist.

Die WO 2008/050022 A2 betrifft eine elektronische Rückansichtsvorrichtung mit einer Anzeigeeinrichtung im Bereich einer Bordanzeige.

Die US 2003/0128182 A1 betrifft einen virtuellen Spiegel, der mit einem Ortungssystem kooperiert.

Aus der DE 100 43 099 A1 ist ein Verfahren zur Überwachung eines rückwärtigen Kraftfahrzeugbereichs bekannt, bei dem Bilder mit unterschiedlichen Abbildungsmaßstäben von einer Videokamera aufgenommen und auf einem Monitor angezeigt werden.

Aus der US 5,949,331 ist eine Anzeigeeinrichtung, die in Blickrichtung eines Fahrers durch eine Windschutzscheibe angeordnet ist, bekannt.

Die DE 10 2007 054 342 B3 betrifft eine Kraftfahrzeugrückblickeinrichtung, bei der der Blickwinkel eines Kamerasystems sich bei Betätigung eines Blinkerhebels erweitert.

Aus der DE 10 2008 031 784 A1 ist eine Kamera zur Unterstützung des Rückwärtsfahrens bekannt. Das verzerrte Bild der Kamera wird bearbeitet und einer Entzerrung unterzogen, die zu einem ungestörten Bild führt. Dieses wird dann weiter verarbeitet um die Perspektive für das Rückwärtsfahren zu optimieren.

Dem gegenüber möchte die Erfindung eine Darstellung eines Kamerabildes erzeugen, das dem vertrauten Bild in einen Rückblickspiegel entspricht und beim Rückwärtsfahren ein größeres Bild bietet.

Die durch die unterschiedlichen Spiegelgläser hervorgerufenen Verzerrungen des Bildes werden für den Fahrer in gewohnter Weise bereitgestellt.

Die vorliegende Erfindung bezieht sich auf eine Bildentzerrung für ein Fahrzeug, welches eine Anzeigeeinheit aufweist, um modifizierte Bilder anzuzeigen und eine Abbildungseinrichtung zum Empfangen erfasster Bilder, die durch die Bildentzerrung verbessert wurden. Das System weist ferner ein Bildentzerrung in Kommunikation mit der Anzeigeeinheit und der Abbildungseinrichtung auf, sodass Pixel, die in den erfassten Bildern gelegen sind, durch Umorientieren bzw. Repositionieren der Pixel von einer ersten Position zu einer zweiten Position mittels eines Übertragungs- bzw. Transfervorgangs verbessert werden.

Die vorliegende Erfindung bezieht sich ferner auf ein Rückblickbildverbesserungssystem für ein Fahrzeug, welches eine Anzeigeeinheit zum Anzeigen modifizierter Bilder aufweist, welche durch das Bildverbesserungssystem verbessert wurden, und eine Abbildungseinrichtung zum Empfangen erfasster Bilder, die durch das Bildverbesserungssystem verbessert wurden. Das System weist ferner ein Bildverbesserungsmodul in Verbindung mit der Anzeigeeinheit und der Abbildungseinrichtung auf, und zwar derart, dass Pixel, die in den erfassten Bildern gelegen sind, gruppiert und aufgeteilt werden, um zumindest einen Bereich von Interesse zu bilden, indem auf die Pixel von einer Grundebene in dem erfassten Bild Bezug genommen wird, um die modifizierten Bilder zu bilden.

Beschreibung der Erfindung
- Fig. 1: zeigt einen exemplarischen Außenspiegel
- Fig. 2: zeigt Beispiele unterschiedlicher Spiegeltypen
- Fig. 3: zeigt eine Kamerainstallation
- Fig. 4: zeigt ein exemplarisches Fahrzeug
- Fig. 5: zeigt ein Display im Fahrzeug
- Fig. 6: zeigt den Ablauf der Bilderfassung
- Fig. 7: zeigt einen alternativen Ablauf
- Fig. 8: zeigt verzerrte und entzerrte Pixelfläche

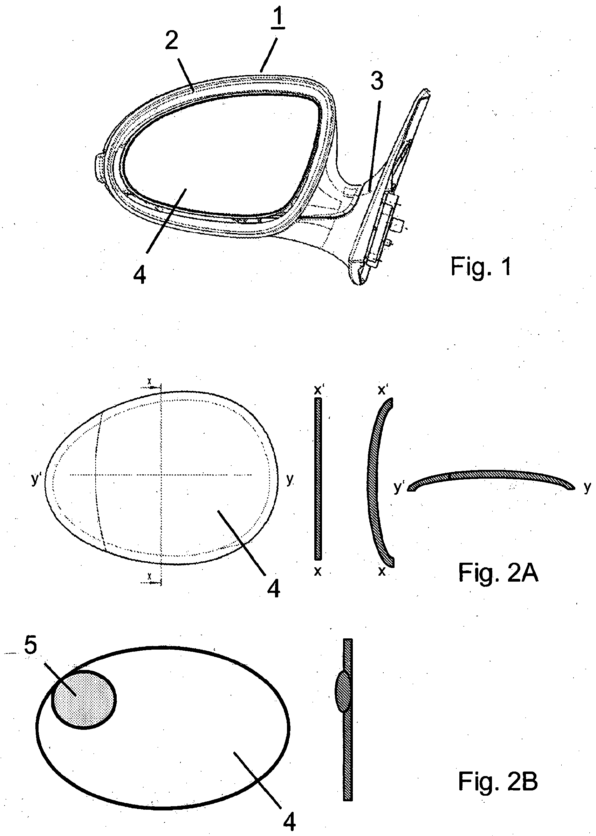

Fig. 1 zeigt einen Außenspiegel 1, der einen Spiegelkopf 2 aufweist, der über einen Spiegelfuß 3 mit einem Fahrzeug verbunden ist. Der Spiegelkopf 2 bildet die Aufnahme für ein Spiegelglas 4 aus.

Die Größe des Spiegelglases 4 wird durch die Anbausituation am Fahrzeug, sowie durch die unterschiedlichen gesetzlichen Regelungen über das zu erzielende Sichtfeld bestimmt. Dabei haben sich unterschiedliche Glastypen für unterschiedliche Regionen herausgebildet. In den USA werden plane Glasvarianten fahrerseitig eingesetzt. In Figur 2B wird ein solcher Spiegel und der Schnitt durch diesen dargestellt. Das Beispiel enthält zudem einen Zusatzspiegel 5, der in Form einer konvexen Zusatzlinse auf den Spiegel aufgebracht ist. Diese Zusatzlinse ermöglicht es dem Fahrer ein stark verzerrtes Bild, aber mit einem weiten Bildwinkel zur Erkennung von Gefahren zu sehen. Die Zusatzlinse wird dabei in unterschiedlichster Weise verbaut, auf der Vor- oder Rückseite des Spiegelglases eingesetzt oder ausgespart usw.

In Figur 2A ist ein Spiegelglas 4 mit einem Krümmungsradius dargestellt. Es werden konvexe Spiegelgläser sowie Gläser mit einem asphärischen Anteil zusätzlich zum konvexen Glas verwendet.

Der Fahrer eines Fahrzeugs ist die Darstellung des jeweiligen Typs von Außenspiegel gewöhnt und kann für sich daraus die Warninformationen ableiten, die er braucht, um das Fahrzeug durch den Verkehr zu steuern.

Außenspiegel haben einen gewissen Anteil am Windwiderstand eines Fahrzeugs. Die Aerodynamik des Fahrzeugs wir durch Außenspiegel beeinflusst. Daher ist es sinnvoll sie durch Kamerasysteme zu ersetzen und so die gesamte CO2-Emission des Fahrzeugs zu minimieren, indem man die turbulenten Strömungen um das Fahrzeug minimiert und einen vorwiegend laminaren Fluss erzeugt.

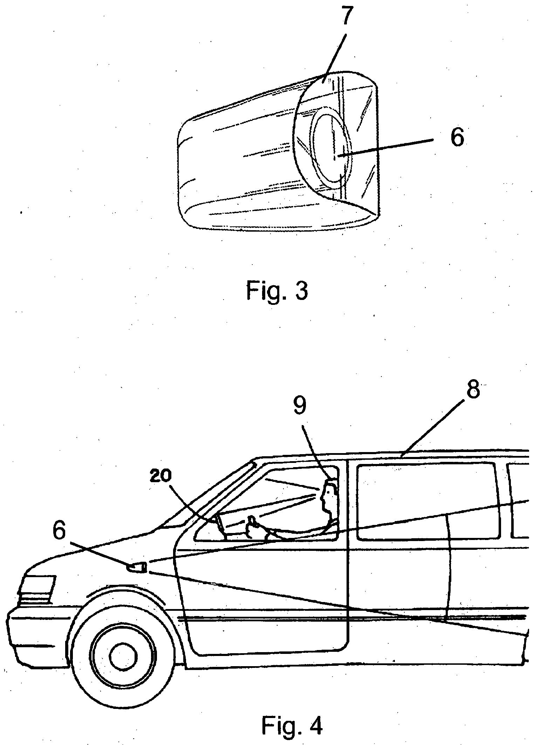

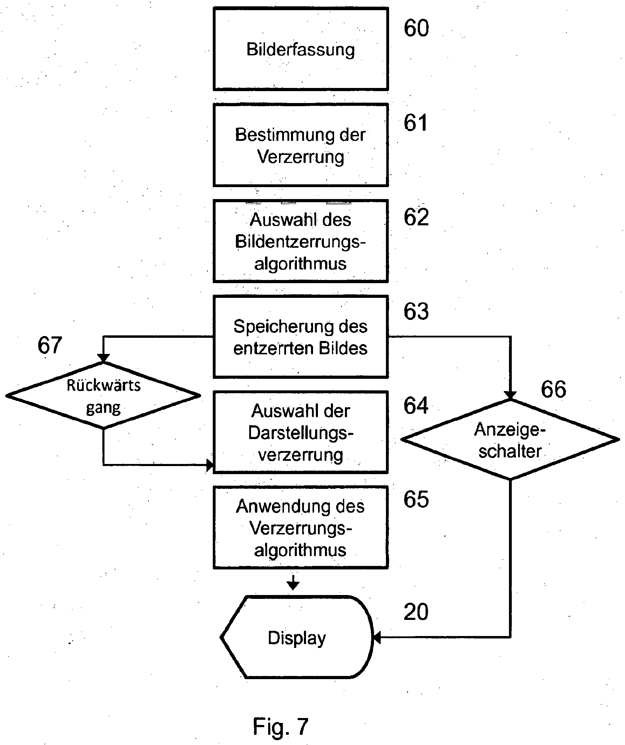

Fig. 3 zeigt eine mögliche, an sich bekannte Installation eines Kamerasystems am Fahrzeug, siehe z.B. Figur 7 der US 5,289,321. Der optische Sensor 6, von der in der Figur nur die optische Linse zu erkennen ist, wird von einem Gehäuse 7 umschlossen. Das Gehäuse 7 wird dicht am Fahrzeug montiert. Das Gehäuse weist eine Form auf, die stromlinienförmig am Fahrzeug abschließt. Der optische Sensor 6 selbst wird im Gehäuse 7 installiert und wasserfest gegen Witterungseinflüsse sowie gegen die Einwirkung von Waschvorgängen mit Waschmitteln, Lösungsmitteln und Hochdruckreinigern gedichtet.

Das Gehäuse 7 weist eine Öffnung auf, durch die die Verkabelung der Kamera geführt ist. Die Anbindung der Kamera an das elektrische System des Fahrzeugs erfolgt dabei über ein beliebiges Bussystem oder einer getrennten Kabelanbindung.

Fig. 4 zeigt exemplarisch die Befestigungsposition eines Sensors 6 im Gehäuse 7 an einem Fahrzeug 8, wie sie im Stand der Technik an sich bekannt ist, siehe z.B. Figur 2 der US 5,949,331. Die Kameraposition ist dabei so zu wählen, dass das geforderte gesetzliche Sichtfeld erfüllt ist. Die Position kann dabei am vorderen Kotflügel, am Spiegeldreieck oder an der Kante des Fahrzeugdaches sein. Durch den Einsatz einer Weitwinkeloptik ist das Sichtfeld auf jeden Fall größer als es durch einen konventionellen Spiegel sein kann.

Im Fahrzeug 8 ist eine Anzeigeeinheit 20 montiert, auf die der Blick des Fahrers 9 fällt. Auf die Anzeigeeinheit wird das Bild der Kamera übertragen.

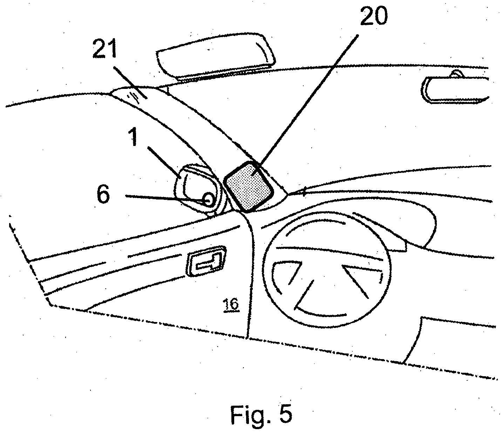

Figur 5 zeigt ein beispielhaftes Ausführungsbeispiel der vorliegenden Erfindung mit einem Anzeigeeinheit 20 das in der Fahrzeugkabine bzw. dem Fahrzeuginnenraum zum Betrachten bzw. zur Ansicht durch den Fahrer 9 vorgesehen ist. Das Rückblick-System 7 liefert Echtzeit-Weitwinkelvideobilder an den Fahrer durch der optische Sensor 6. Der optische Sensor 6 ist beispielsweise eine Sensortechnologie mit einer ladungsgekoppelte Einrichtung ("CCD = Charge-Coupled Device) oder einem komplementären Metall-Oxid-Halbleiter ("CMOS = Complementary Metal Oxide Semiconductor) zum Erfassen von kontinuierlichen Echtzeit-Bildern. In Figur 5 ist die Anzeigeeinheit 20 an der A Säule befestigt, so dass der gewohnte Blick in den Rückspiegel an eine Position geführt wird, die ganz ähnlich zu der bisher gewohnten Position des Außenspiegels ist.

Sollte eine Anbringung an der A-Säule wegen der Airbag- Sicherheitssysteme schwierig sein bietet sich einen Position auf dem Armaturenbrett nahe des Spiegeldreiecks oder der A-Säule an. Die Anzeigeeinheit 20 stellt die Echtzeitbilder der Kamera 6 dar, wie sie in diesem Beispiel durch eine Kamera 6 im Außenspiegel erfasst werden. Die Erfindung hängt nicht davon ab, ob der Außenspiegel bereits vollständig ersetzt ist oder noch als Zusatzinformation vorhanden ist. Der optische Sensor 6 kann durch ein semitransparentes Spiegelglas blicken.

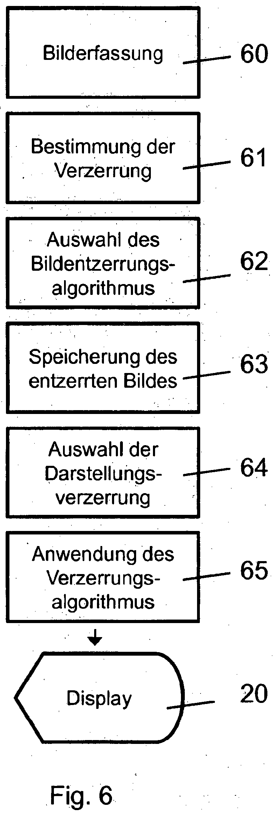

Das von einem optische Sensor 6 erfässte Sichtfeld wird durch ein Bildentzerrungsmodul, das mit dem Rückblicksystem 6 assoziiert ist, gemäß dem in Fig. 6 dargestellten Steuerprozess verarbeitet und verbessert. Das Bildentzerrungsmodul verwendet einen Teil des Fahrzeugs als eine Referenz (z. B. einen Teil der Fahrzeugkontur, der Kotflügel), wenn es die kontinuierlichen Bilder modifiziert, die als Videodaten an die Anzeigeeinheit 20 übertragen werden. Die Anzeigeeinheit 20 könnte ein Monitor, eine Flüssigkristallanzeige bzw. ein ein TFT-Display oder LCD (LCD = liquid crystal display), ein Navigationsbildschirm oder andere bekannte Videoanzeigeeinrichtungen sein, die es in der vorliegenden Erfindung dem Fahrer 9 gestatten, den Bereich neben dem Fahrzeug zu sehen. Sinnvoll ist auch der Einsatz von OLED Displays, die sich an die Kontur des Armaturenbretts oder der A-Säule anpassen, oder eine holografische oder Laser-Projektion-Anzeige.

Die Bildentzerrung ist in dem Fahrzeug angeordnet und weist Verarbeitungskapazitäten auf, die durch eine Berechnungseinheit durchgeführt werden, wie beispielsweise einen Digitalsignalprozessor bzw. DSP, ein feldprogrammierbares Gate-Array bzw. FPGA (FPGA = field programmable gate array), Mikroprozessoren oder anwendungsspezifische Schaltkreise bzw. ASICs (ASIC = application specific integrated circuit) oder eine Kombination davon, die Programmierfähigkeiten aufweisen, beispielsweise durch ein computerlesbares Medium wie beispielsweise Software oder Firmware, die in einem Mikroprozessor aufgenommen ist, einschließlich ROM (ROM = Read Only Memory), oder wie eine binäre Bilddatei, die von einem Anwender programmiert werden kann. Die Bildentzerrung kann integral mit der Abbildungseinrichtung oder der Anzeigeeinheit 20 ausgebildet sein oder kann entfernt in Kommunikation (drahtgebunden oder drahtlos) mit sowohl der Abbildungseinrichtung als auch der Anzeigeeinheit angeordnet sein.

Die Initiierung bzw. Inbetriebnahme der Bildentzerrung tritt auf, wenn der Fahrer das Fahrzeug startet. Mindestens eine Abbildungseinrichtung erfasst kontinuierliche Bilder von der Seite des Fahrzeugs und übermittelt die kontinuierlichen Bilder an die Bildentzerrung. Die Bildentzerrung modifiziert die kontinuierlichen Bilder und überträgt die verbesserten Bilder über Videodaten an die Anzeigeeinheit 20, um dem Fahrer zu helfen.

In Figur 6 werden die einzelnen Schritte der Bildentzerrung sowie der Bildverzerrung dargestellt. Die Erfindung entzerrt dabei das Bild der Weitwinkelkamera und wendet auf dieses entzerrte Bild eine Nachverzerrung an, um dem Bild dieselbe Sicht wie die des gewünschten Spiegelglases zu geben.

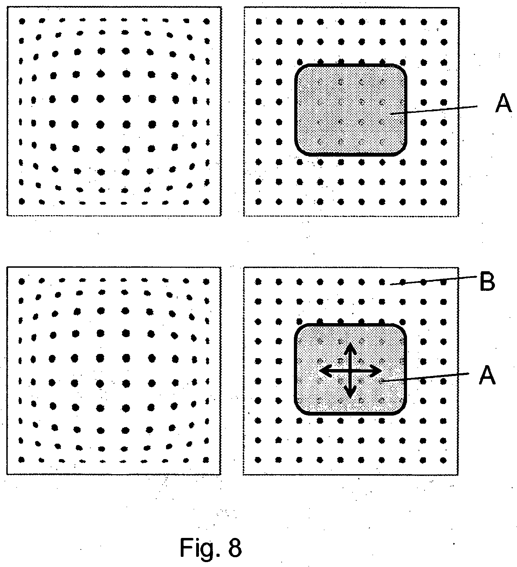

Der erste Schritt ist die Erfassung des Bildes. In einem zweiten Schritt wird der Typus der Verzerrung, dem das Bild unterliegt, festgelegt. Bspw. kann eine Fischaugenverzerrung vorliegen, wie sie links in Fig. 8 gezeigt und gemäß Fig. 2B der US 2008/0159594 gut bekannt ist.

In einem weiteren Schritt wird der Algorithmus gewählt, der für die vorliegende Verzerrung angepasst ist. Ein Beispiel wird in der DE 10 2008 031 784 A1 erklärt.

Eine optische Verzerrungskorrektur ist eine verbessernde Funktion, die auf die kontinuierlichen Bilder angewandt wird. Die optische Verzerrungskorrektur erleichtert das Entfernen eines perspektivischen Effektes und einer visuellen Verzerrung, die durch eine Weitwinkellinse verursacht wird, die in der Kamera 6 verwendet wird. Die optische Verzerrungskorrektur verwendet ein mathematisches Modell der Verzerrung, um die richtige Position der Pixel zu bestimmen, die in den kontinuierlichen Bildern erfasst wurden. Das mathematische Modell korrigiert auch die Pixelposition der kontinuierlichen Bilder als ein Ergebnis der Differenzen zwischen der Breite und Höhe einer Pixeleinheit aufgrund des Aspekt- bzw. Seitenverhältnisses, das durch eine Weitwinkellinse erzeugt wird.

Für bestimmte Linsen, die von der Kamera 6 verwendet werden, können die Verzerrungskoeffizientenwerte k1 und k2 vorbestimmt sein, um dabei zu helfen, die Tonnenverzeichnung bzw. -verzerrung zu eliminieren, die durch die Verwendung einer Weitwinkellinse erzeugt wird. Die Verzerrungskoeffizientenwerte werden für eine Echtzeit-Korrektur der kontinuierlichen Bilder verwendet.

Die Verzerrungskoeffizientenwerte k1 und k2 können weiter eingestellt bzw. abgestimmt werden durch Verwendung eines Bildes, das in den kontinuierlichen Bildern erfasst ist, das bekannte gerade Linien aufweist, beispielsweise die Spurenkennzeichnung auf der Straße. Gemäß diesem Aspekt der vorliegenden Erfindung wird das Verzerrungszentrum erfasst durch Analysieren des erfassten kontinuierlichen Bildes auf der Suche nach den geradesten horizontalen und vertikalen Linien, wobei das Zentrum dort gelegen ist, wo sich die zwei Linien schneiden. Das erfasste Bild kann dann mit verschiedenen oder fein abgestimmten Verzerrungskoeffizienten-Werten k1 und k2 in einem Trial-and-Error- bzw. Versuch-und-Fehler-Verfahren korrigiert werden. Wenn beispielsweise die Linien auf einer Seite des Bildes "tonnenförmig verzerrt" ("barreled") sind und Linien auf der anderen Seite des Bildes "kissenförmig verzerrt" ("pin-cushioned") sind, dann muss sich der Mittenversatz in Richtung der kissenverzeichneten Seite bewegen. Wenn ein Wert gefunden wurde, der die Verzerrung ausreichend korrigiert, dann können die Werte für das Verzerrungszentrum 42 und die Verzerrungskoeffizienten- Werte k1 und k2 in dem mathematischen Modell der optischen Verzerrungskorrektur verwendet werden.

Als Resultat des Entzerrungsschrittes liegt ein fehlerarmes Bild vor, das in der Anzeigeeinheit angezeigt werden kann. Das nach der Entzerrung gewonnene Bild entspricht dem Bild eines planen Spiegels, wobei die simulierte Spiegelfläche größer als die gewohnte Glasspiegelfläche wäre. Sollte ein solcher planer Spiegel simuliert werden, werden die weiteren Schritte unterdrückt und die Daten direkt nach Fig. 7 auf das Display gegeben. Das Bild eines planen Spiegels wird über eine Auswahl an Pixeln des optischen Sensors definiert. Dabei werden, wie in Fig. 8 gezeigt, nur die Pixel in der Mitte des optischen Sensors gewählt. Um den planen Spiegel in größerer Annäherung an den Hardwarespiegel zu simulieren, müssen Daten abgeschnitten werden und der Ausschnitt auf einen Bereich in der Mitte des Bildes limitiert werden.

Der nächste Schritt 64 wird ausgewählt welcher Operator auf die Pixel angewendet wird um das angestrebte Bild zu erhalten. Beispielsweise wird der Algorithmus ausgewählt, um das fehlerarme Bild wieder so zu verzerren, wie es in einem Spiegelglas mit beispielsweise asphärischen Verlauf dargestellt würde. Dazu müssen die Pixelwerte in einem bestimmten Bereich verschoben werden um den Eindruck eines gekrümmten Spiegelglases zu erhalten.

Im nächsten Schritt 65 wird die Nachverzerrung des vorliegenden Bildes ausgeführt. Als Beispiel wird ein planer Spiegel mit einem konvexen Zusatzspiegel nach Fig. 2B gewählt. Hierzu wird eine definierte Anzahl an Pixel zur Darstellung der planen Spiegelfläche ausgewählt. In Fig. 8 ist das der Bereich A, der in der Mitte des optischen Sensors die plane Fläche darstellt. Für die Darstellung der Information der konvexen Zusatzlinse müssen alle Pixel des Sensors verwendet werden sowohl der Bereich A als auch B, um die Weitwinkeldarstellung des Bildes, die sich in einem definierten Bereich des Displays befindet, mit Daten zu versorgen.

Die Information aller Pixel wird einer Transformation unterzogen und das Bild der gesamten Pixel verzerrt und auf einen kleinen Bereich des Displays abgebildet. Dabei werden Informationen durch geeignete Operatoren zusammengefasst um das Bild optimal auf die geringere Anzahl der Displaypixel abzubilden.

Alle bisher beschriebenen Operationen stellen ein definiertes Bild während des Fahrens des Fahrzeugs dar. Das Bild wird je nach Einsatzgebiet des Fahrzeugs eingestellt.

Eine weitere Einstellmöglichkeit des simulierten Außenspiegels erfolgt durch die Funktion des Anpassens des Sichtfeldes an die Fahrerposition. Wie in einem konventionellen Spiegel, der durch einen elektrischen Antrieb an den Blickwinkel des Fahrers angepasst wird, erfolgt die "Spiegelverstellung" der Planspiegelsimulation durch Verschieben des Ausschnitts A auf dem optischen Sensor, so dass andere Pixel des optischen Sensors zur Darstellung kommen. Die Anzahl der Pixel und somit die Größe des Ausschnitts wird nicht verändert. Diese Anpassung ist durch die Pfeile in Fig. 8 angedeutet.

Für einen gewölbten Spiegel ist die Anpassung an das Blickfeld des Fahrers keine einfache Verschiebung eines Pixelausschnittes, sondern mit einer Neuberechnung des Bildes verbunden.

Zusätzlich zu der normalen Anpassung an den Fahrer ist eine Funktion möglich, die beim Rückwärtsfahren ein größeres Bild bietet, das gegebenenfalls auch den Bereich am hinteren Rad des Fahrzeugs umfasst.

Legt der Fahrer den Rückwärtsgang ein, wird das Bild des optischen Sensors auf eine andere Weise nämlich in einer erweiterten Rücksicht dargestellt. Im Auswahlschalter 67 wird beim Erkennen des Rückwärtsganges die Funktion aufgerufen, die ein Bild vom hinteren Rad sowie der umgebenden Fläche erzeugt.

Wird wieder ein Vorwärtsgang eingelegt, schaltet die Anzeige automatisch wieder in den vorgewählten Anzeigemodus zurück.

Die gesamte Steuerung der Außerispiegelsimulation erfolgt über Steuerelemente, die in konventioneller Weise an der Fahrzeugtür oder am Armaturenbrett angebracht sind. Die Voreinstellung und Definition der Spiegelfunktion wird von Autohersteller vorgenommen und ist vor Manipulationen durch den Fahrer geschützt. Die Fahrzeuge werden mit diesen Voreinstellungen in die jeweiligen Regionen ausgeliefert.

Diese Voreinstellung können verändert werden, allerdings nicht durch den Benutzer selbst; so dass die Sicherheit der Darstellung nicht berührt ist.

Wichtig ist bei der werksseitigen Voreinstellung auch die Kalibrierung der Bilderfassung an das individuelle Fahrzeug. Bevor die Einstellung für den gewünschten Außenspiegeltyp vorgenommen wird, wird das Bild optimal eingestellt. Das hat den Vorteil, dass die Positionierung des optischen Sensors nicht mit höchster Genauigkeit erfolgen muss. Der Herstellungsprozess am Band des Autoherstellers ist somit vereinfacht. Die Kalibrierung erfolgt über die Software und nicht durch die räumliche Einstellung der Sensorposition.

## Patentansprüche

1. Außenspiegelsimulation für ein Fahrzeug (8), bestehend aus
mindestens einem optischen Sensor (6) in einem Gehäuse (7, 2), mit einer Optik, die eine Weitwinkel -Abbildung auf der Ebene des optischen Sensors erlaubt, mit einer Daten-Anbindung an das Fahrzeug (8), und
einer Anzeigeeinheit (20), die in etwa in Blickrichtung des Fahrers auf die Position eines Außenspiegels angebracht ist,
**dadurch gekennzeichnet, dass**
die Simulation ein Bild in der Anzeigeeinheit (20) darstellt, das dem Bild, das ein Außenspiegel mit einer definierten spiegelnden Fläche und Krümmung reflektiert, entspricht, wobei das Bild der Anzeigeneinheit einen planen Außenspiegel, einen konvexen Außenspiegel, einen asphärischen Außenspiegel oder einen Außenspiegel mit Zusatzlinse simuliert, und
das Bild der Anzeigeneinheit beim Rückwärtsfahren an eine erweiterte Darstellung angepasst ist, indem
ein Bild einer Weitwinkeloptik aufgenommen wird und die Information der Pixel des optischen Sensors folgenden Schritten unterzogen wird:
- Erfassung des Bildes
- Bestimmung der Verzerrung
- Auswahl des Bildentzerrungsalgorithmus
- Speicherung des entzerrten Bildes
- Auswahl der Darstellung
- Anwendung des Verzerrungsalgorithmus auf die Auswahl der Pixel für die Darstellung
- Anpassen des Bildes der Anzeige beim Rückwärtsfahren an eine erweiterte Darstellung.

2. Außenspiegelsimulation nach Anspruch 1, **dadurch gekennzeichnet, dass** das Bild der Anzeigeneinheit eine Verstellung der Sicht für den Fahrer simuliert.

3. Außenspiegelsimulation nach Anspruch 1, **dadurch gekennzeichnet, dass** die Verstellung der Sicht durch eine Verschiebung des dargestellten Bereichs (A) in zwei Achsen des optischen Sensors erfolgt.

4. Verfahren zur Außenspiegelsimulation nach einem der Ansprüche 1 bis 3, **dadurch gekennzeichnet, dass**
die Anzeige zusätzlich zu der gewählten Verzerrung durch eine Anpassungsschaltung an den Blick des Fahrers oder
durch eine Abfrage des eingelegten Ganges des Fahrzeuges beeinflusst wird.

5. Verfahren zur Außenspiegelsimulation nach Anspruch 4, **dadurch gekennzeichnet, dass** die Anzeige herstellerseitig kalibrierbar ist.

6. Verfahren zur Außenspiegelsimulation nach Anspruch 5, **dadurch gekennzeichnet, dass** die Anzeige nach der Kalibrierung auf den gewünschten Spiegeltyp eingestellt ist.

## Claims

1. An exterior mirror simulation for a vehicle (8), consisting of
at least one optical sensor (6) in a housing (7, 2), having an optical system that permits a wide-angle imaging on the plane of the optical sensor, having a data connection to the vehicle (8), and
a display unit (20) that is attached approximately in direction of view of the driver at the position of an exterior mirror,
**characterized in that**
the simulation represents an image in the display unit (20) which corresponds to the image reflected by an exterior mirror having a defined reflective surface and curvature, wherein the image of the display unit simulates a planar exterior mirror, a convex exterior mirror, an aspherical exterior mirror or an exterior mirror having an additional lens, and the image of the display unit is adapted to an extended representation during reverse driving, by
recording an image by a wide-angle optical system and subjecting the information of the pixels of the optical sensor to the following steps:
- Recording of the image
- Determining the distortion
- Selecting the image rectification algorithm
- Storing the rectified image
- Selecting the representation
- Applying the rectification algorithm to the selection of pixels for the representation
- Adapting the image on the display to an extended representation during reverse driving.

2. The side mirror simulation according to claim 1, **characterized in that** the image of the display unit simulates an adjustment of the view for the driver.

3. The side mirror simulation according to claim 1, **characterized in that** the adjustment of the view is achieved through a displacement of the area (A) shown in two axes of the optical sensor.

4. A method for side mirror simulation according to any one of claims 1 to 3, **characterized in that**
in addition to the selected distortion, the display is influenced by a circuit for adaptation to the view of the driver, or
by a query of the engaged gear of the vehicle.

5. The method for side mirror simulation according to claim 4, **characterized in that** the display can be calibrated by the manufacturer.

6. The method for side mirror simulation according to claim 5, **characterized in that** the display is set to the desired mirror type following the calibration.

## Revendications

1. Simulation de rétroviseur extérieur pour un véhicule (8), se composant d'
au moins un capteur optique (6) dans un boîtier (7, 2), ayant une optique permettant une représentation en grand-angle au niveau du capteur optique, ayant une connexion de données au véhicule (8), et
une unité d'affichage (20), laquelle est posée approximativement dans direction du regard du conducteur à l'emplacement d'un rétroviseur extérieur,
**caractérisée en ce que**
la simulation représente une image sur l'unité d'affichage (20) correspondant à l'image reflétée par un rétroviseur extérieur ayant une surface réfléchissante et une courbure définies, où l'image de l'unité d'affichage simulant un rétroviseur extérieur plan, un rétroviseur extérieur convexe, un rétroviseur asphérique ou un rétroviseur extérieur ayant lentille supplémentaire, et
l'image de l'unité d'affichage est ajustée à une représentation étendue lors de la conduite en marche arrière,
en une image d'une optique grand-angle étant prise et l'information des pixels du capteur optique étant soumise aux étapes suivantes :
- Enregistrement de l'image
- détermination de la distorsion
- sélection de l'algorithme de correction de distorsion d'image
- Sauverage de l'image corrigée
- sélection de la représentation
- application de l'algorithme de distorsion à la sélection des pixels pour la représentation
- ajustement de l'image de l'affichage à une représentation étendue lors de la conduite en marche arrière.

2. Simulation de rétroviseur extérieur selon la revendication 1, **caractérisée en ce que** l'image de l'unité d'affichage simule un réglage de la vue pour le conducteur.

3. Simulation de rétroviseur extérieur selon la revendication 1, **caractérisée en ce que** le réglage de la vue est effectué par un déplacement de la zone représentée (A), dans deux axes du capteur optique.

4. Procédé pour la simulation d'un rétroviseur extérieur selon l'une des revendications 1 à 3, **caractérisé en ce que**,
en plus de la distorsion sélectionnée, l'affichage est influencé par un circuit d'adaptation au regard du conducteur ou
par une demande de la vitesse enclenchée du véhicule.

5. Procédé pour la simulation d'un rétroviseur extérieur selon la revendication 4, **caractérisé en ce que**
l'affichage peut être calibré par le constructeur.

6. Procédé pour la simulation d'un rétroviseur extérieur selon la revendication 5, **caractérisé en ce que**,
après le calibrage, l'affichage est réglé pour correspondre au type de rétroviseur souhaité.
